# EUROPEAN PATENT APPLICATION

(11) **EP 3 369 643 A1**
(43) Date of publication of application: **05.09.2018**
(21) Application number: 18157450.0
(22) Date of filing: 19.02.2018
(51) Int. Cl.: B62B 3/18

(54) **A NESTABLE TROLLEY FRAME**

(30) Priority: 01.03.2017 GB 201703327; 18.05.2017 GB 201708017
(71) Applicant: Partington Engineering Limited, Cinderford, Gloucestershire GL14 2YA (GB)
(72) Inventor: JONES, Brian, Cinderford, Gloucestershire GL14 2LP (GB)
(74) Representative: Wynne-Jones IP Limited

(57) **Abstract**

A trolley and a nestable trolley frame (100) are disclosed. The trolley frame (100) comprises two first frame members (101a, 101b) which converge toward each other in a direction which is from a first end (103) of the frame (100) to a second end (104) of the frame (100) and two second frame members (102a, 102b) which converge toward each other in a direction which is from the second end (104) of the frame (100) to the first end (103) of the frame (100). The first frame members (101a, 101b) are separately coupled at a distal end thereof to a distal end of a respective second frame member (102a, 102b), the second frame members (102a, 102b) are coupled together at a proximal end thereof forming a substantially "M" or "W" shape frame.

## Description

The present invention relates to a nestable trolley frame and a trolley comprising the nestable trolley frame.

Trolleys are well known for transporting items and come in a variety of sizes and configurations to suit the particular application. For example, supermarket shopping trolleys are known for retaining items while shopping and comprise a basket which is supported upon a wheeled frame. So-called "sack" trolleys are also well known for transporting larger items, including boxes and the like.

However, a problem with most trolleys is that they occupy a significant space when not required. We have now devised an nestable trolley frame which addresses this problem.

According to a first aspect of the present invention, there is provided a nestable trolley frame comprising two first frame members which converge toward each other in a direction which is from a first end of the frame to a second end of the frame, and two second frame members which converge toward each other in a direction which is from the second end of the frame to the first end of the frame, wherein the first frame members are separately coupled at a distal end thereof to a distal end of a respective second frame member, and wherein the second frame members are coupled together at a proximal end thereof, such that the trolley frame is permitted to nest within a further identical frame by passing the first/second end of the frame into the second/first end of the further frame, respectively.

In an embodiment, the first frame members and the second frame members extend in a common plane. The second frame members preferably extend between the first frame members forming a substantially W-shape or M-shape trolley frame.

In an embodiment, the first and second frame members comprise substantially linear members. However, in an alternative embodiment, it is envisaged that the first and second frame members may comprise arcuate members.

In an embodiment, the coupling between the first frame members and the respective second frame members form a respective apex in the trolley frame proximate the second end of the frame. The coupling between the second frame members preferably form an apex in the trolley frame proximate the first end of the frame.

In an embodiment, the trolley frame comprises a wheel disposed at an underside of thereof, proximate the first end and second end of the trolley. Preferably, the trolley comprises a wheel disposed at a proximal end of each of the first frame members and a wheel disposed at an underside of the coupling between the first and second frame members.

In an embodiment, the wheels are coupled to the trolley frame via a respective mounting which extends between the frame and the respective wheel.

In an embodiment, the frame may comprise at least two channels which extend parallel to each other within a common plane. Each of the channels may define a through-hole having a longitudinal axis which substantially bisects an angle defined between the two coupled frame members. The channels may extend within a common plane with the coupled frame members and each of the channels may comprise a first connecting portion and second connecting portion arranged substantially in parallel, and being spaced from each other. Each connecting portion may be arranged to couple the respective frame members at their distal ends and the channels may be adapted to receive transporting means for lifting the trolley frame.

According to a second aspect of the present invention, there is provided a trolley comprising a nestable trolley frame of the first aspect and a support base disposed upon the frame for receiving items.

In an embodiment, the support base is hingedly coupled to the frame. The base may be hingedly coupled to the base proximate the first or second end thereof, such that the base can pivot with respect to the frame between a first configuration in which the base extends substantially parallel with a plane of the trolley frame for supporting items, and a second configuration in which the base extends substantially transverse to the trolley frame for nesting with further trolleys during storage.

In an embodiment, the trolley further comprises at least one side wall which cooperates with the base to form a trolley enclosure for receiving items.

In an embodiment, the trolley further comprises a handle for permitting a user to maneouvre the trolley.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments.

Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described with reference to the accompanying drawings, in which:
Figure 1a is a plan view of a nestable trolley frame according to an embodiment of the present invention;
Figure 1b is a side view of the embodiment of the trolley frame illustrated in figure 1;
Figure 1c is a view of the embodiment of the trolley frame illustrated in figure 1 from the first end thereof; and,
Figure 2 is a side view of a trolley according to an embodiment of the present invention.
Figure 3a is a plan view of a nestable trolley frame according to a further embodiment of the present invention;
Figure 3b is a view of the embodiment of the trolley frame illustrated in figure 3a from the second end thereof,

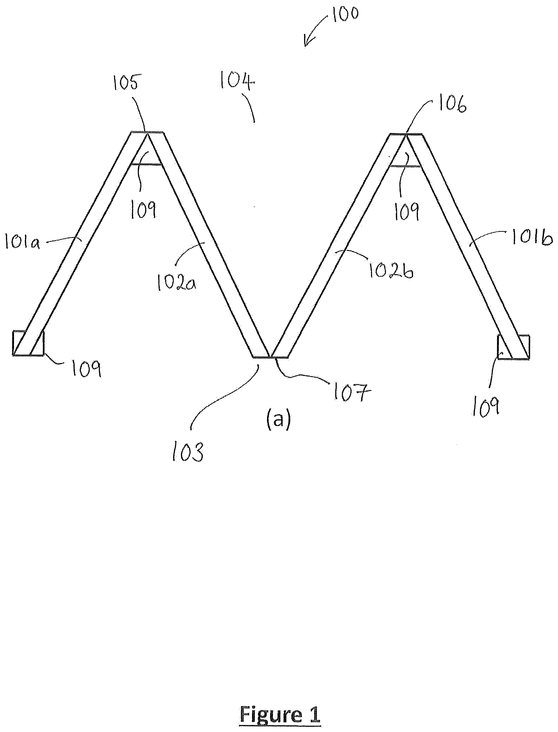

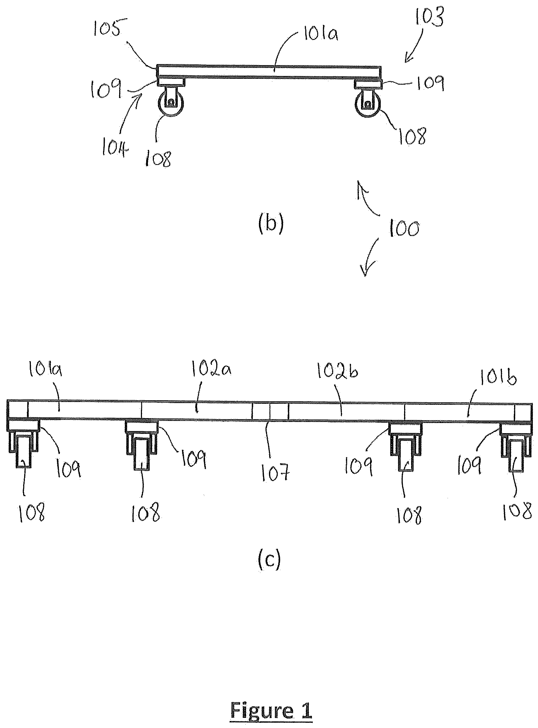

Referring to figure 1 of the drawings, there is illustrated a nestable trolley frame 100 according to an embodiment of the present invention. The trolley frame 100 defines a support for supporting items (not shown) placed thereon and may be formed of a metal or rigid plastics material, for example.

The frame 100 comprises two substantially linear first frame members 101a, 101b and two substantially linear second frame members 102a, 102b, however, the skilled reader will recognise that the frame members 101, 102 may alternatively comprise arcuate members. The first and second frame members 101, 102 are orientated to extend within a common plane to provide a substantially planar support frame 100, and the first frame members 101 are further orientated to converge toward each other in a direction which is from a first end 103 of the frame 100 to a second end 104 of the frame 100.

Similarly, the two second frame members 102 are also orientated to converge toward each other, but in a direction which is from the second end 104 of the frame 100 to the first end 103 of the frame 103. The second frame members 102 are disposed between the first frame members 101 and the first frame members 101 are separately coupled at a distal end thereof to a distal end of a respective second frame member 102. The second frame members 102 are coupled together at a proximal end thereof such that the frame 100 comprises a substantially "M" or "W" shape.

The first frame member 101a, 101b and the respective adjoining second frame member 102a, 102b form an acute angle therebetween and thus form a respective apex 105, 106 proximate the second end 104 of the frame 100. Similarly, the second frame members 102a, 102b define an acute angle therebetween and thus a further frame apex 107 disposed proximate the first end 103 of the frame 100. In an alternative embodiment, which is not illustrated, it is envisaged that the frame 100 may instead comprise a single-piece frame member which is shaped, namely turned, to form the respective apices and thus the first and second frame members 101, 102.

The trolley frame 100 further comprises a plurality of wheels 108 disposed at one planar side of the frame 100, namely an underside thereof. The wheels 108 may comprise castor wheels for example, and are secured to the frame members 101, 102 via a respective mounting 109, which may comprise a bracket or plate rigidly secured to the underside of the frame 100 at the proximal end of each of the first frame members 101, and also at the apices 105, 106 disposed proximate the second end 104 of the frame 100. The frame members 101, 102 forming the apices 105, 106 are further coupled to the respective mounting 109, which also acts to maintain a rigid configuration and orientation of the first and second members 101, 102relative to each other.

The wheels 108 permit the frame 100 to be manoeuvred easily while the particular frame shape permits the frame 100 to nest within a further identical frame such that the nested frames can occupy a reduced floor space when not required. In this respect, the trolley frame 100 is permitted to nest within a further identical frame by passing the first/second end 103/104 of the frame 100 into the second/first 104/103 end of the further frame, respectively.

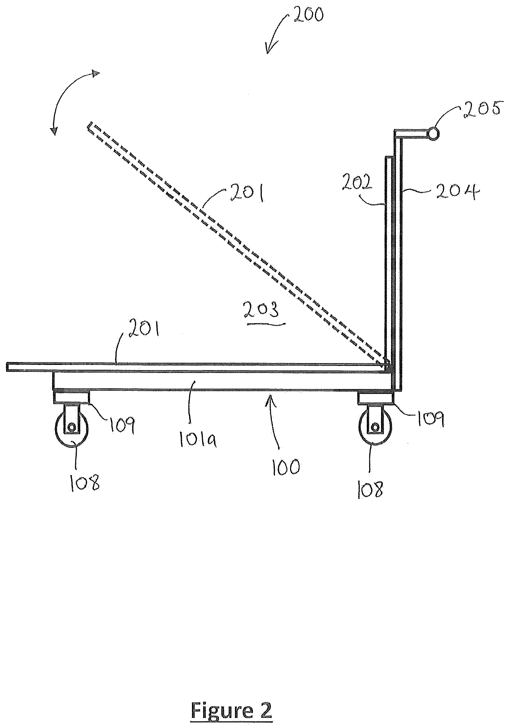

Referring to figure 2 of the drawings, there is illustrated a trolley 200 according to an embodiment of the present invention for supporting and transporting items (not shown) placed thereon. The trolley 200 comprises the nestable trolley frame 100 described above and as such the features of the trolley frame 100 have been referenced with the same numerals. The trolley 200 further comprises a support base 201 which may comprise a continuous, planar support surface or a planar mesh for example, for supporting items placed thereon. The base 201 is hingedly coupled to the first 103 or second end 104 of the trolley frame 100 via a hinge (not shown) such that the base 201 can pivot with respect to the trolley frame 100 between a first configuration in which the base 201 extends substantially parallel with the plane of the trolley frame 100 for supporting items, and a second configuration in which the base 201 extends substantially transverse to the trolley frame 100 for nesting with further trolleys during storage.

The trolley 200 may further comprise at least one side wall 202 which cooperates with the base 201 to form an enclosure 203 for retaining items placed therein. Referring to trolley 200 illustrated in figure 2 of the drawings, the wall 202 is disposed along the side of the base 201 about which the base 201 can pivot, however the skilled reader will recognise that the enclosure may comprise walls 202 which extend from alternative an/or additional sides of the base 201.

The trolley 200 further comprises a handle frame 204 which extends from the first 103 or second end 104 of the frame 100, upwardly away from the trolley frame 100 and which terminates at a handle 205 which enables a user to suitably manoeuvre the trolley 200.

During use of the trolley 200, the base 201 is configured to a lowered configuration so that it extends over the trolley frame 100 for receiving items placed thereon. When it is desired to store the trolley 200, namely nest the trolley with further trolleys, the base 201 is reconfigured to the second configuration so that it extends substantially vertically, parallel to the wall 203, and the trolley 200 is then manoeuvred using the handle 205 so that the first/second end 103/104 of the trolley frame 100 passes into the second/first end 104/103 of the frame 100 of a further trolley. When arranged in this nested configuration, the first and second members 101, 102 of the trolley frame 100 of each trolley 200 extend adjacent each other in near contact therewith and thus occupy a reduced the floor space compared with two separated trolleys.

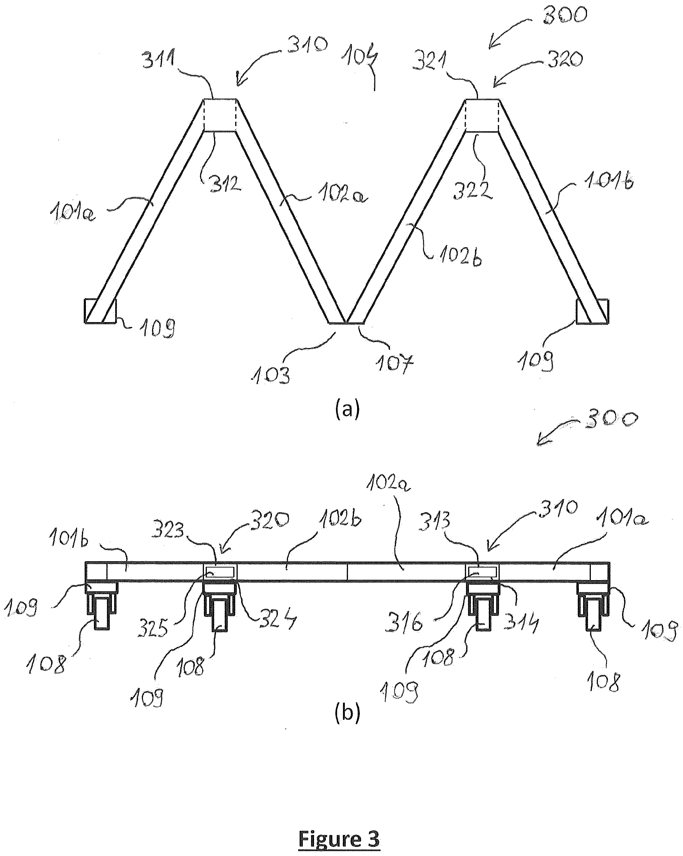

In a further embodiment illustrated in figures 3a and 3b a trolley frame 300 is described which may comprise at least two channels 310, 320 which extend parallel to each other within a common plane. In particular, each of the channels 310, 320 may define a through-hole 316, 326 having a longitudinal axis which substantially bisects an angle defined between the two coupled frame members 101a and 102a or 101b and 102b. Furthermore, the channels 310, 320, 316, 326 may extend within a common plane with the coupled frame members 101a, 102a, 101b, 102b and each of the channels 310, 320 may comprise a first connecting portion 313, 323 and second connecting portion 314, 324 arranged substantially in parallel, and being spaced from each other. Each of the channels 310, 320, 316, 326 may further comprise a first end 312, 322 which may be orientated toward the first end 103 of the frame 300 and second end 311, 321 which may be orientated toward the second end 104 of the frame 300. Each connecting portion 313, 314, 323, 324 may be arranged to couple the respective frame members 101a and 102a or 101b and 102b at their distal ends. The portions 313, 314, 323, 324 may comprise metal plates (not shown) which may be welded, brazed or bolted to the respective frame members. The frame 300 may comprise all of the features mentioned in relation to the frame 200 and may also be embodied in the trolley 200. The channels 310, 320, 316, 326 may also be adapted to receive transporting means (not shown) for lifting the trolley frame 300, and in particular to receive a fork of the forklift so that the frame 300 or the trolley incorporating such a frame may be lifted and moved to a different location. In particular, each of the forks of the forklift may be inserted into the respective channels 310, 320, 316, 326 via the second ends 311, 321 thereof so the loaded frame 300 or trolley incorporating such a frame may be lifted and moved by the forklift. An additional support element (not shown), such as a transverse beam connecting the proximal ends of the frame members 101a, 102a, 101b, 102b may be disposed within the frame 300 for providing additional support region to a portion of the forks of the forklift so that nesting of the frame 300 with further frames 300 is not prevented. When the frame 300 is embodied in a trolley 200, a portion of each of the forks of the forklift may alternatively rest against a respective portion of any of the base 201, wall 202 or handle frame 204 disposed proximate to the first end 103 of the frame 300.

## Claims

1. A nestable trolley frame comprising two first frame members which converge toward each other in a direction which is from a first end of the frame to a second end of the frame, and two second frame members which converge toward each other in a direction which is from the second end of the frame to the first end of the frame, wherein the first frame members are separately coupled at a distal end thereof to a distal end of a respective second frame member, and wherein the second frame members are coupled together at a proximal end thereof, such that the trolley frame is permitted to nest within a further identical frame by passing the first/second end of the frame into the second/first end of the further frame, respectively.

2. A nestable trolley frame according to claim 1, wherein the first frame members and the second frame members extend in a common plane.

3. A nestable trolley frame according to claim 1 or 2, wherein the second frame members extend between the first frame members.

4. A nestable trolley frame according to any preceding claim, wherein the first and second frame members comprise substantially linear members.

5. A nestable trolley frame according to any of claims 1 to 3, wherein the first and second frame members comprise arcuate members.

6. A nestable trolley frame according to any preceding claim, further comprising a wheel disposed at an underside of thereof, proximate the first and second end of the trolley.

7. A nestable trolley frame according to any preceding claim, wherein the trolley comprises a wheel disposed at a proximal end of each of the first frame members and a wheel disposed at an underside of the coupling between the first and second frame members, and wherein the wheels are coupled to the trolley frame via a respective mounting which extends between the frame and the respective wheel.

8. A nestable trolley frame according to any preceding claim, wherein the coupling between the first frame members and the respective second frame members form a respective apex in the trolley frame proximate the second end of the frame.

9. A nestable trolley frame according to any preceding claim, wherein the coupling between the second frame members form an apex in the trolley frame proximate the first end of the frame.

10. A nestable trolley frame according to any of the claims 1 to 9, wherein the frame comprises at least two channels which extend parallel to each other within a common plane.

11. A nestable trolley frame according to claim 10, wherein each of the channels defines a through-hole having a longitudinal axis which substantially bisects an angle defined between the two coupled frame members.

12. A nestable trolley frame according to claim 11, wherein the channels extend within a common plane with the coupled frame members and each of the channels comprises a first connecting portion and second connecting portion arranged substantially in parallel, and being spaced from each other.

13. A nestable trolley frame according to claim 12, wherein each connecting portion is arranged to couple the respective frame members at their distal ends and wherein the channels are adapted to receive transporting means for lifting the trolley frame.

14. A trolley comprising a nestable trolley frame according to claim 1 and a support base disposed upon the frame for receiving items, and wherein the support base is hingedly coupled to the frame.

15. A trolley according to claim 14, wherein the base is hingedly coupled to the frame proximate the first or second end thereof, such that the base can pivot with respect to the frame between a first configuration in which the base extends substantially parallel with the plane of the trolley frame for supporting items, and a second configuration in which the base extends substantially transverse to the trolley frame for nesting with further trolleys during storage.
